# EUROPEAN PATENT APPLICATION

(11) **EP 3 375 422 A1**
(43) Date of publication of application: **19.09.2018**
(21) Application number: 17161611.3
(22) Date of filing: 17.03.2017
(51) Int. Cl.: A61H 1/02, A47C 9/02, B25J 9/00

(54) **WEARABLE SITTING POSTURE ASSISTING DEVICE**

(71) Applicant: noonee AG, 8630 Rüti ZH (CH)
(72) Inventor: Gunura, Keith, 8003 Zürich (CH); Motovilova, Olga, 8045 Zürich (CH); Vafi, Daniel, 8032 Zürich (CH)
(74) Representative: Daub, Thomas

(57) **Abstract**

The invention relates to an individualization assembly for a wearable sitting posture assisting device (100a), comprising at least one individualization unit (12a) which is connectable to at least one functional assembly (14a) of the wearable sitting posture assisting device (100a) and is configured for individualization of the wearable sitting posture assisting device (100a) in at least one wearing state.

## Description

### State of the Art

The invention relates to an individualization assembly for a wearable sitting posture assisting device according to claim 1 and to a functional assembly according to claim 12.

A posture assisting device is known from the document WO 2015/028373 A1.

The objective of the invention is, in particular, to provide a generic individualization assembly and/or a generic functional assembly and/or a wearable sitting posture assisting device, with improved characteristics regarding comfort. Another objective of the invention is, in particular, to provide a generic individualization assembly and/or a generic functional assembly and/or a wearable sitting posture assisting device with improved characteristics regarding maintenance, in particular regarding an easy exchange of wear parts. Yet another objective of the invention is, in particular, to reduce costs and/or to simplify manufacturing and/or handling, allowing to adjust and/or individualize a wearable sitting posture assisting device. Yet another objective of the invention is, in particular, to improve comfort and/or handling and/or hygiene, in particular in case of users sharing a wearable sitting posture assisting device. The objective is achieved according to the invention by the features of claim 1, while advantageous embodiments and further developments of the invention may be gathered from the dependent claims and the further independent claim.

### Advantages of the Invention

An individualization assembly for a wearable sitting posture assisting device is proposed, comprising at least one individualization unit which is connectable to at least one functional assembly of the wearable sitting posture assisting device and is configured for individualization of the wearable sitting posture assisting device in at least one wearing state.

By means of the invention, a high degree of comfort, in particular a high degree of handling comfort and/or a high degree of wearing comfort, can be achieved. Furthermore, easy and/or versatile individualization and/or adjustment of a wearable sitting posture assisting device to a user can be achieved. Advantageously, a high degree of hygiene, in particular regarding an exchange of sweaty components, can be achieved. In particular, cushion elements and/or other components that come in contact with a person wearing a wearable sitting posture assisting device can be adjusted and/or exchanged easily. Furthermore, a wearable sitting posture assisting device can be adjusted to a user's body dimensions and/or preferences. Furthermore, costs in connection with providing a wearable sitting posture assisting device which is adjustable to a user in different ways can be advantageously reduced.

A "wearable sitting posture assisting device" is herein to be understood as a device which is configured for receiving a weight force of a person in a sitting posture or in a partly sitting posture and in particular for transmitting the weight force to a ground. In particular, an angle between a thigh and a shank of at least one leg of the person in the sitting posture is no greater than 130°, preferably no greater than 120° and advantageously no greater than 110°, and/or no less than 60°, preferably no less than 70° and advantageously no less than 80°. In particular, the angle between the thigh and the shank of the person is approximately 90° in the sitting posture. In particular, an angle between a thigh and a shank of the person in the partly sitting posture is no greater than 170°, preferably no greater than 160° and advantageously no greater than 150°, and/or no less than 100°, preferably no less than 110° and advantageously no less than 120°. In particular, the angle between the thigh and the shank of the person is approximately 130° in the partly sitting posture. It is conceivable that the partly sitting posture is a posture in which the person leans forward while partly bending his knees. In particular, a person wearing the wearable sitting posture assisting device is enabled to sit and/or to partly sit and/or to sit down on the wearable sitting posture assisting device, wherein at least a portion of the weight force is counteracted by the wearable sitting posture assisting device, and/or wherein the person counteracts only a fraction of the weight force using his muscles. In particular, the wearable sitting posture assisting device is configured for being worn by the person while the person is standing and/or while the person is walking. Advantageously, the wearable sitting posture assisting device is configured for supporting different sitting postures and/or partly sitting postures, which are in particular characterized by different sitting angles.

The wearable sitting posture assisting device in particular defines a sitting direction. Preferably, the person faces and/or looks in the sitting direction when sitting or partly sitting on the wearable sitting posture assisting device and facing forward. In particular, the sitting direction is oriented parallel to a floor on which the person is standing and/or sitting and/or walking when wearing the wearable sitting posture assisting device. In particular, the wearable sitting posture assisting device defines a walking direction. Preferably, the person faces in the walking direction when walking and/or standing with the wearable sitting posture assisting device and facing forward. In particular, the walking direction is oriented parallel to a floor on which the person is standing and/or sitting and/or walking when wearing the wearable sitting posture assisting device. In particular, the wearable sitting posture assisting device is only designed to receive and transmit the weight force. Preferably, the wearable sitting posture assisting device is not designed to generate a controllable force configured to assist a person while walking, standing or lifting loads. "Configured" is in particular to mean specifically programmed, designed and/or equipped. By an object being configured for a certain function is in particular to be understood that the object implements and/or fulfills said certain function in at least one application state and/or operating state.

Preferably, the wearable sitting posture assisting device comprises at least one leg unit. In particular, the wearable sitting posture assisting device comprises at least one additional leg unit. In particular, the leg unit comprises at least one, preferably one, upper leg and/or at least one, preferably one, lower leg and/or comprises at least one, preferably one, foot unit, and/or comprises at least one, preferably one, ground contact unit. Advantageously, the upper leg is connected to the lower leg, in particular via at least one, in particular one, knee joint. Preferably, the foot unit is connected to the lower leg. Advantageously, the ground contact unit is connected to the lower leg and/or to the foot unit. It is conceivable that the ground contact unit is at least partly implemented integrally with the lower leg and/or at least partly implemented integrally with the foot unit. It is also conceivable that the foot unit is at least partly implemented integrally with the lower leg. Preferably, the wearable sitting posture assisting device comprises at least one upper body wearing unit. In particular, the leg unit is connected to the upper body wearing unit, preferably via at least one connection strap. In this context, the term "a first object and a second object being at least partly implemented integrally" is in particular to mean that at least one component of the first object and at least one component of the second object are implemented integrally with each other. "Implemented integrally" is in particular to mean, in this context, connected at least by substance-to-substance bond, e.g., by a welding process, an adhesive bonding, an injection-molding process and/or by another process that is deemed expedient by a person having ordinary skill in the art. Advantageously, "implemented integrally" could in particular mean made of one piece. "Made of one piece" is, in particular, to mean, in this context, manufactured from one single piece, e.g., by production from one single cast and/or by manufacturing in a one-component or multi-component injection-molding process, and advantageously from a single blank.

Preferably, the wearable sitting posture assisting device comprises two leg units. Advantageously, the leg unit and the additional leg unit are implemented identically. It is also conceivable that the leg unit and the additional leg unit are implemented mirror-symmetrically with respect to each other. It is conceivable that the leg unit is configured for being worn on a left leg and the additional leg unit is configured for being worn at a right leg, or vice versa. Advantageously, the leg unit is configured for being worn either on a left leg or on a right leg. Further advantageously, the additional leg unit is configured for being worn on a left leg or on a right leg. Preferably, the additional leg unit is connected to the upper body wearing unit, preferably via at least one connection strap. In particular, the person wearing the wearable sitting posture assisting device wears the leg unit, in particular solely, on a first leg, for instance a left leg or a right leg. In particular, the person wearing the wearable sitting posture assisting device wears the additional leg unit, in particular solely, on a second leg, for instance a right leg or a left leg. Advantageously, the leg unit is arranged on a rear side of the leg on which the leg unit is worn. Further advantageously, the additional leg unit is arranged on a rear side of the leg on which the additional leg unit is worn. In particular, the leg units of the wearable sitting posture assisting device are arranged on respective rear sides of the legs of the person when the person is sitting and/or partly sitting and/or sitting down on the wearable sitting posture assisting device and/or standing and/or walking with the wearable sitting posture assisting device. Preferably, the person wearing the wearable sitting posture assisting device wears the upper body wearing unit on his upper body. Advantageously, the upper body wearing unit is implemented as a belt and/or as braces and/or as suspenders. The wearable sitting posture assisting device enables the person wearing it to walk around, to stand, to sit down on the wearable sitting posture assisting device if required or desired and to stand up after sitting or partly sitting on the wearable sitting posture assisting device.

Preferably, the wearable sitting posture assisting device comprises at least one thigh connection unit for connecting the leg unit, in particular the upper leg, to a thigh of the person. Preferably, the thigh connection unit features at least one thigh strap. In particular, the wearable sitting posture assisting device comprises a seat unit configured for providing at least one sitting surface for the person, in particular in case the person is sitting or partly sitting on the wearable sitting posture assisting device, preferably for the thigh and/or for at least a lower portion of a buttock of the person, wherein "buttock" is preferably to mean one cheek of the buttocks. Advantageously, the seat unit is connected to and/or connectable to the upper leg. Preferably, the seat unit comprises at least one sitting element which features the sitting surface. Advantageously, the seat unit is in contact with the thigh of the person in case the person is sitting or partly sitting on the wearable sitting posture assisting device. Preferably, the seat unit is arranged on a rear side of the thigh of the person in case the person is standing or walking with the wearable sitting posture assisting device.

Advantageously, the upper leg comprises at least one upper leg support. Preferably, the seat unit is connected to and/or connectable to the upper leg support. Advantageously, the thigh connection unit and/or the thigh strap is connected to and/or connectable to the upper leg support. In particular, the upper leg support is implemented as a frame element. Preferably, the upper leg support is implemented as an elongate element. Advantageously, the upper leg features at least one upper leg longitudinal axis which is oriented at least substantially parallel to a longitudinal axis of the thigh of the person. Preferably, a main extension direction of the upper leg support is oriented at least substantially parallel, or parallel, to the upper leg longitudinal axis. In particular, the upper leg support is at least partly, preferably at least to a large extent, advantageously completely made of plastic. It is also conceivable that the upper leg support is at least partly, preferably at least to a large extent, advantageously completely made of metal, in particular made of a light metal or a light alloy, for instance aluminum and/or titanium and/or beryllium and/or scandium or another suitable metal. It is further conceivable that the upper leg support is at least partly, preferably at least to a large extent, advantageously completely made of a composite material, in particular a fiber reinforced composite material and/or a fiber reinforced plastic and/or a carbon fiber reinforced material and/or a carbon fiber reinforced polymer and/or a fiber reinforced thermoplastic. The term "at least to a large extent" is in particular to mean to an extent of at least 55 %, preferably to an extent of at least 65 %, further preferably to an extent of at least 75 %, advantageously to an extent of at least 85 % and further advantageously to an extent of at least 95 %. In this context "at least substantially parallel" is in particular to mean an orientation of a direction with respect to a reference direction, in particular in a plane, wherein the direction differs from the reference direction in particular by less than 15°, advantageously by less than 10° and particularly advantageously by less than 2°. A "main extension direction" of an object is, in particular, to be understood, in this context, as a direction extending in parallel to a largest side of an imaginary rectangular cuboid which only just entirely encloses the object.

Preferably, the lower leg is arranged on a rear side of the shank of the person in at least one wearing state. In particular, the lower leg comprises at least one lower leg support. Advantageously, the lower leg support is implemented as a frame element. Preferably, the lower leg support is implemented as an elongate element. In particular, the lower leg features at least one lower leg longitudinal axis, which is oriented at least substantially parallel to a longitudinal axis of the shank of the person. Preferably, a main extension direction of the lower leg support is oriented at least substantially parallel, or parallel, to the lower leg longitudinal axis. Advantageously, the lower leg longitudinal axis is oriented at least substantially parallel, or parallel, to the upper leg longitudinal axis.

Preferably, the upper leg and the lower leg together define a sitting angle. Advantageously, the sitting angle is an angle included by the upper leg longitudinal axis and the lower leg longitudinal axis, in particular on a rear side of the upper leg and the lower leg. In particular, in the sitting posture the sitting angle is no greater than 130°, preferably no greater than 120° and advantageously no greater than 110°, and/or no less than 60°, preferably no less than 70° and advantageously no less than 80°. In particular, the sitting angle is approximately 90° in the sitting posture. In particular, in the partly sitting posture the sitting angle is no greater than 170°, preferably no greater than 160° and advantageously no greater than 150°, and/or no less than 100°, preferably no less than 110° and advantageously no less than 120°. In particular, the sitting angle is approximately 130° in the partly sitting posture. Preferably, the sitting angle at least approximately equals the angle between the thigh and the shank of the person. In particular, the sitting angle is approximately 180° in a standing posture.

In particular, the knee joint pivotably connects the lower leg to the upper leg, preferably pivotably about a knee joint axis. Advantageously, the knee joint axis is oriented at least substantially perpendicularly, or perpendicularly, to the upper leg longitudinal axis and/or to the lower leg longitudinal axis. Preferably, the knee joint axis is oriented at least substantially perpendicularly, or perpendicularly, to the sitting direction. Advantageously, the upper leg support and the lower leg support together implement at least a portion of the knee joint, or the knee joint. Preferably, a value of the sitting angle corresponds to a value of a knee joint position of the knee joint. In this context "at least substantially perpendicularly" is in particular to mean an orientation of a direction with respect to a reference direction, in particular in a plane, wherein the direction and the reference direction include an angle which differs from an angle of 90° by no more than 15°, advantageously by no more than 10° and particularly advantageously by no more than 2°.

Preferably, the wearable sitting posture assisting device comprises at least one locking unit, which is configured for locking the upper leg with respect to the lower leg and/or to the knee joint in a certain sitting angle and/or is configured for defining a smallest sitting angle. Advantageously, the locking unit is configured for locking the knee joint in different sitting angles, and/or for defining different smallest sitting angles, which sitting angles can be preferably chosen by the person. It is conceivable that the locking unit is configured for allowing, in a locked state, the sitting angle to be increased. In particular, the person is enabled to stand up when the locking unit is in the locked state. Preferably, the locking unit is configured for enabling the person to sit down again at the defined smallest sitting angle after standing up, with the locking unit still defining the same smallest sitting angle. Advantageously, the locking unit comprises at least one blocking element, which is configured for blocking and/or unblocking the knee joint and/or for fixating the sitting angle and/or for defining a smallest sitting angle. Preferably, the blocking element is implemented as a spring, in particular as a gas spring. Advantageously, the blocking element is connected to the upper leg, in particular to the upper leg support, and to the lower leg, in particular to the lower leg support. Preferably, the blocking element is configured for damping a movement of the upper leg with respect to the lower leg during sitting down and/or during standing up. Advantageously, the locking unit features at least one actuation element, which is configured for actuating the blocking element. Preferably, the actuation element is configured for enabling the person to block or unblock the blocking element. Advantageously, the actuation element is a mechanical actuation element. It is also conceivable that the actuation element is an electronic actuation element. It is further conceivable that the locking unit comprises at least one control unit, which is configured for detecting a sitting-down condition when the person sits down and/or detecting a standing-up condition when the person stands up and/or triggering the actuation element according to a requirement of blocking the blocking element.

In particular, the wearable sitting posture assisting device comprises a foot unit, which foot unit may be configured for connecting to a foot and/or shoe of the person and/or which foot unit may be connected to a foot and/or shoe of the person. Preferably, the foot unit comprises at least one foot connector for connecting to the foot and/or shoe of the person. Advantageously, the foot connector features at least one shoe strap. In particular, the foot connector may feature at least one upper strap, which advantageously runs across an instep of the foot and/or shoe which the foot unit is connected to. Preferably, a foot connector may feature at least one lower strap, which advantageously runs across a sole of the foot and/or shoe which the foot unit is connected to. Preferably, a foot connector is configured for being worn on a foot and/or shoe. Advantageously, the foot unit comprises at least one foot unit support. Preferably, the foot connector is connected to the foot unit support. Advantageously, the foot unit support comprises at least one bracket, and/or the foot unit support is implemented as a bracket. Preferably, the shoe strap, in particular the upper strap and/or the lower strap, is connected to the bracket. It is conceivable that the foot unit is connected to and/or connectable to the lower leg, in particular to the lower leg support. It is further conceivable that the foot unit support element could be at least partly implemented integrally, or implemented integrally, with the lower leg, in particular with the lower leg support.

Additionally or alternatively, in particular alternatively to the foot unit, the wearable sitting posture assisting device, in particular the leg unit, may comprise at least one shank connection unit for connecting to the shank of the person. In particular, the wearable sitting posture assisting device may comprise the shank connection unit and be free of a foot unit and/or a foot connector. The wearable sitting posture assisting device may also comprise both at foot connector and a shank connector, in particular both assigned to the same leg unit.

In particular, the ground contact unit comprises at least one ground contact element. Preferably, the ground contact element features at least one ground contact surface, which is advantageously configured for contacting a ground when the person is sitting or partly sitting on the wearable sitting posture assisting device. Advantageously, the ground contact surface is bent and/or curved, in particular convexly bent and/or convexly curved. However, it is also conceivable that at least a portion of or the entire ground contact surface is at least substantially flat or flat. In particular, the ground contact element is at least partly, preferably at least to a large extent, advantageously completely made of rubber. Preferably, a weight force of the person is transmitted from the seat unit to the upper leg support and/or from the upper leg support to the knee joint and/or from the knee joint to the lower leg support and/or from the lower leg support to the ground contact element and/or from the ground contact element to the ground. In particular, the weight of the person is additionally transmitted to the ground via the foot and/or shoe of the person. Preferably, the ground contact element is arranged on a rear side of the foot and/or shoe of the person. When the person is sitting or partly sitting on the wearable sitting posture assisting device, the foot and/or shoe of the person is in contact with the ground in addition to the ground contact element. Preferably, the ground contact element is arranged contactlessly with respect to the ground when the person walks or stands while wearing the sitting posture assisting device.

By a first object being connected to a second object is in particular to be understood that the first object and the second object are directly connected and/or that at least a portion of the first object directly mechanically contacts the second object. It is further conceivable that the first object is, in particular directly, fixated to the second object and/or vice versa. It is also conceivable that the first object and the second object are at least partly implemented integrally.

In particular, the functional assembly comprises at least one functional unit which is configured for implementing at least one posture assisting function for a person in at least one wearing state. Furthermore, in particular, the functional assembly comprises a connection unit which is configured for connecting to at least one individualization unit, in particular the individualization unit of the individualization assembly. Preferably, the functional assembly, in particular the functional unit, comprises at least one leg unit, in particular the afore-mentioned leg unit. It is also conceivable that the functional assembly and/or the functional unit comprises the leg unit and the additional leg unit. Preferably, the functional assembly and the individualization assembly together implement the wearable sitting posture assisting device. In particular, the functional assembly may be implemented by several components and/or elements and/or units, which are arranged spatially distant from each other in the wearing state. In particular, the functional assembly may be segmented and/or implemented in several parts and/or segments.

It is conceivable that the individualization assembly, in particular the individualization unit, is configured for individualizing a plurality of elements and/or units and/or functional aspects of the wearable sitting posture assisting device. In particular, the individualization assembly may be implemented by several components and/or elements and/or units, which are arranged spatially distant from each other in the wearing state. In particular, the individualization assembly may be segmented and/or implemented in several parts. Preferably, the individualization unit comprises at least one individualization element, which is configured for implementing at least one individualizable and/or individualized element of the wearable sitting posture assisting device. Further preferably, the individualization unit comprises a plurality of different individualization elements. It is also conceivable that the wearable sitting posture assisting device comprises a plurality of individualization assemblies, which are in particular assigned to different body parts the wearable sitting posture assisting device is connectable to. Additionally or alternatively, it is also conceivable that the individualization assembly comprises a plurality of individualization units.

Preferably, the connection unit comprises at least one connection element, which is configured for implementing at least a portion of a connection between the individualization unit and the functional assembly. It is conceivable that the connection unit comprises different connection elements for connecting to different individualization elements. In particular, the connection between the individualization unit and the functional unit is configured for withstanding a force generated by the person wearing the wearable sitting posture assisting device, for instance when walking and/or when sitting and/or when partly sitting while wearing the wearable sitting posture assisting device. Preferably, at least a portion of the individualization unit is, in particular repeatedly and/or without damage, connectable to and disconnectable from the functional assembly.

Preferably, the individualization comprises at least one adjustment of the wearable sitting posture assisting device to at least one size and/or body dimension and/or preference and/or designated field of application, in particular an adjustment to the person wearing the wearable sitting posture assisting device. Advantageously, a functional assembly can be individualized for two or more different persons and/or applications and/or situations by combining it with, in particular by connecting it to, two or more different individualization units, in particular of different individualization assemblies. For instance, the individualization unit may be configured for changing and/or defining a color and/or a surface and/or mechanical properties and/or a stiffness and/or a softness and/or other properties of at least a portion of the wearable sitting posture assisting device. Preferably, the individualization unit implements at least one wearing function of the wearable sitting posture assisting device, for instance a connecting function to a body part, a contact function for contacting the person and/or at least one wearing function of the wearable sitting posture assisting device.

In a further embodiment of the invention it is proposed that the individualization unit is configured for contacting, in the wearing state, at least one body part of a person wearing the wearable sitting posture assisting device. Preferably, the individualization unit is configured for directly contacting the body part. In particular, the individualization unit implements at least one body contact surface of the wearable sitting posture assisting device. Preferably, the individualization unit implements different body contact surfaces which are configured for contacting different body parts of the person wearing the wearable sitting posture assisting device, respectively. It is also conceivable that the individualization unit is configured for indirectly contacting the body part, for instance through a non-individualized fabric layer or the like. In particular in this case, the individualization unit may comprise at least one inlay element which is arranged in at least one body part contact area of the wearable sitting posture assisting device. As a result, a high degree of wearing comfort and/or flexibility can be achieved when adjusting a wearable sitting posture assisting device to a size and/or weight and/or the body dimensions of a user. In particular, elements that may come in direct contact with a person wearing a wearable sitting posture assisting device are advantageously exchangeable and/or individualized.

Furthermore, it is proposed that at least a portion of the individualization unit is exchangeable without tools. Preferably, the individualization unit and the connection unit together implement at least one quick connector which is configured for connecting the individualization unit to the functional assembly. For instance, the individualization unit and the connection unit together may implement at least one hook-and-loop fastener and/or at least one magnetic connector and/or at least one form-fit connector and/or at least one click connector and/or at least one bayonet connector or the like. As a result, an easy exchange of components for individualization can be achieved.

In a further embodiment of the invention it is proposed that the individualization unit is configured for implementing at least one function which is different from a size adjustment. In particular, the individualization unit is different from a length adjustment unit, in particular different from a length adjustment unit configured for adjusting a length of the upper leg or the lower leg. For instance, a function implemented by the individualization unit may be a sitting function and/or a sitting comfort function and/or a wearing function and/or a usage function and/or a function depending on any field of application of the wearable sitting posture assisting device. Preferably, the functional unit is adjustable in size. As a result, a high degree of flexibility regarding adjusting a wearable sitting posture assisting device to different users and/or applications can be achieved.

In yet a further embodiment of the invention it is proposed that the individualization unit comprises at least one exchangeable padding unit. Preferably, the padding unit is configured for implementing a padding of a body part connector. Advantageously, the padding unit comprises at least one padding element. It is conceivable that the padding element implements the individualization element. Preferably, the padding element is implemented as a padding cushion. It is conceivable that the padding unit implements at least one body part connection surface which directly contacts at least one body part in at least one wearing state. It is also conceivable that the padding unit is implemented as an inlay padding unit. In particular in this case the connection unit of the functional assembly may implement at least one pocket for the padding unit, in particular for the padding element, which pocket is in particular configured for at least partly accommodating and/or containing the padding unit, in particular the padding element, in the wearing state. It is conceivable that the individualization unit is implemented as the exchangeable padding unit. It is conceivable that the padding unit is implemented as a thigh padding unit or as a shank padding unit or as a foot padding unit. In particular, it is conceivable that the wearable sitting posture assisting device comprises a plurality of different individualization assemblys which comprise different types of padding units. As a result, a high degree of wearing comfort can be achieved. Furthermore, an individualizability of a wearable sitting posture assisting device regarding a size and/or a shape and/or a material of a padding unit can be achieved.

A high degree of hygiene and/or an easy exchange of sweaty components can be achieved, in particular, if the padding unit comprises at least one material which is at least partly permeable to air. Preferably, the padding element is made of an air-permeable and/or breathable material. Further preferably, the air-permeable and/or breathable material features a mesh structure and/or a 3-dimensional structure. Advantageously, the air-permeable and/or breathable material is a 3-dimensional mesh fabric. As a result, comfort losses due to transpiration can be preferably reduced. Furthermore, components that may come in contact with sweat can be easily exchanged for respective users.

It is further proposed that the padding unit comprises at least one seat padding element. Preferably, the padding element is the seat padding element. Advantageously, the padding unit is implemented as a seat padding unit. Preferably, the seat padding element is configured for implementing at least a portion of the sitting surface and/or for being arranged below the sitting surface. In particular in the latter case it is conceivable that the connection unit implements a pocket for the seat padding element, which pocket implements at least a portion of the sitting surface. As a result, a wearable sitting posture assisting device with individualizable seat cushions and/or thigh cushions can be provided.

In another embodiment of the invention it is proposed that the padding unit comprises at least one belt padding element. Preferably, the belt padding element is configured for at least partly implementing a belt, in particular a belt of the upper body wearing unit. Advantageously, the connection unit comprises at least one connection element which is part of the belt and which may, in particular, implement a pocket for the belt padding element and/or which may be configured for attaching the belt padding element to. As a result, a size and/or a fit of a belt of a wearable sitting posture assisting device can be easily individualized. Furthermore, belt components that may come in contact with sweat while wearing a wearable sitting posture assisting device can be exchanged for respective users.

In a further embodiment of the invention it is proposed that the padding unit comprises at least one upper body padding element. Preferably, the upper body padding element is a suspender padding element and/or a shoulder padding element and/or a chest padding element and/or a back padding element. Further preferably, the upper body padding element is configured for implementing at least a portion of the upper body wearing unit, in particular at least a portion of the vest of the upper body wearing unit. As a result, a size and/or a fit of an upper body wearing unit can be easily individualized.

Furthermore, it is proposed that the individualization unit comprises at least one wearing unit for connecting to at least one body part of the person in the wearing state. In particular, the wearing unit may be implemented at least as a part of or may entirely implement the thigh connection unit and/or the seat unit and/or the foot connector and/or the shank connection unit and/or the upper body wearing unit. In particular, the wearing unit comprises at least one body wearing element which preferably configured for connecting to at least one body part of the person. For instance, the wearing unit may comprise at least one strap element and/or band element for connecting to a body part and/or at least one suspender element and/or at least one sitting element or the like. It is conceivable that the wearing unit is implemented as a body part connecter. It is further conceivable that the individualization unit comprises different wearing units for connecting to different body parts of the person and/or which are implemented as different types of body part connectors. For instance, the individualization unit may comprise at least one foot connector and/or at least one thigh connection unit and/or at least one upper body connector or the like. As a result, a wearable sitting posture assisting device can be advantageously adjusted to a user and/or a user can connect to a wearable sitting posture assisting device using individualized body part connectors.

In a further embodiment of the invention it is proposed that the individualization unit is configured for implementing at least a portion of at least one quick connector in the wearing state, which quick connector is configured for providing at least one inadvertent-error-prevention constraint. In particular, the quick connector provides the inadvertent-error-prevention constraint. Preferably, the individualization unit and the connection unit together implement the quick connector. Advantageously, the quick connector is of a poka yoke-type. The quick connector may be implemented as a click connector and/or a magnetic connector and/or a key lock fastener and/or a socket fastener or the like. Preferably, the individualization unit and the connection unit implement different connectors for different individualization elements, which preferably implement inadvertent-error-prevention constraints that prevent a connection of individualization elements in wrong positions, in particular in connection positions for other individualization elements. As a result, safety issues and/or handling errors can be advantageously avoided.

The invention further encompasses a system, comprising the wearable sitting posture assisting device and comprising at least one alternative individualization assembly, which is configured for at least partly replacing the individualization assembly in order to implement an alternative wearable sitting posture assisting device together with the functional assembly. In particular, the functional assembly may be individualized for a first person in combination with the individualization unit and may further be individualized for a second person in combination with the alternative individualization unit. As a result, a functional assembly can be used by different users while being easily adjustable according to the user's body dimensions and/or preferences.

A high degree of cost efficiency and/or versatility regarding usage for different applications and/or usage by different users can be achieved by a method for using the system according to the invention, wherein the wearable sitting posture assisting device is used by a first person in a first usage and wherein the alternative wearable sitting posture assisting device is used by a second person in a second usage, which may be equivalent to or different from the first usage as regards an application position and/or a range of designated sitting angles and/or environmental conditions and/or forces exerted onto the wearable sitting posture assisting device or the like.

Herein, the individualization assembly, the functional assembly and the wearable sitting posture assisting device according to the invention are not to be limited to the application and implementation described above. In particular, for the purpose of fulfilling a functionality herein described, the individualization assembly, the functional assembly and the wearable sitting posture assisting device according to the invention may comprise a number of respective elements, structural components and/or units that differs from the number mentioned herein. Furthermore, regarding the value ranges mentioned in this disclosure, values within the limits mentioned are to be understood to be also disclosed and to be used as applicable.

### Drawings

Further advantages may become apparent from the following description of the drawings. In the drawings exemplary embodiments of the invention are shown. The drawings, the description and the claims contain a plurality of features in combination. The person having ordinary skill in the art will purposefully also consider the features separately and will find further expedient combinations.

If there is more than one specimen of a certain object, in some instance only one of these may be given a reference numeral in the figures and in the description.

The description of this specimen may be correspondingly transferred to the other specimens of the object.

It is shown in:
- Fig. 1: a person wearing a wearable sitting posture assisting device, in a schematic lateral view,
- Fig. 2: the person wearing the wearable sitting posture assisting device, in a schematic front view,
- Fig. 3: the person wearing the wearable sitting posture assisting device, in a schematic rear view,
- Fig. 4: a system comprising the wearable sitting posture assisting device featuring an individualization assembly, and comprising an alternative individualization assembly and an alternative wearable sitting posture assisting device, in a schematic front view.
- Fig. 5: a portion of the wearable sitting posture assisting device, in a schematic rear view,
- Fig. 6: a first individualization element of the individualization assembly, in a perspective view,
- Fig. 7: a belt of the wearable sitting posture assisting device, in a schematic front view,
- Fig. 8: a second individualization element of the individualization assembly, in a perspective view,
- Fig. 9: an individualization element of a first alternative individualization assembly, in a perspective view,
- Fig. 10: an individualization element of a second alternative individualization assembly, in a perspective view,
- Fig. 11: an individualization element of a third alternative individualization assembly, in a perspective view,
- Fig. 12: an individualization element of a fourth alternative individualization assembly, in a schematic front view,
- Fig. 13: an individualization element of a fifth alternative individualization assembly in a disconnected state, in a lateral sectional view, and
- Fig. 14: the individualization element of the fifth alternative individualization assembly in a connected state, in a lateral sectional view.

### Description of the Exemplary Embodiments

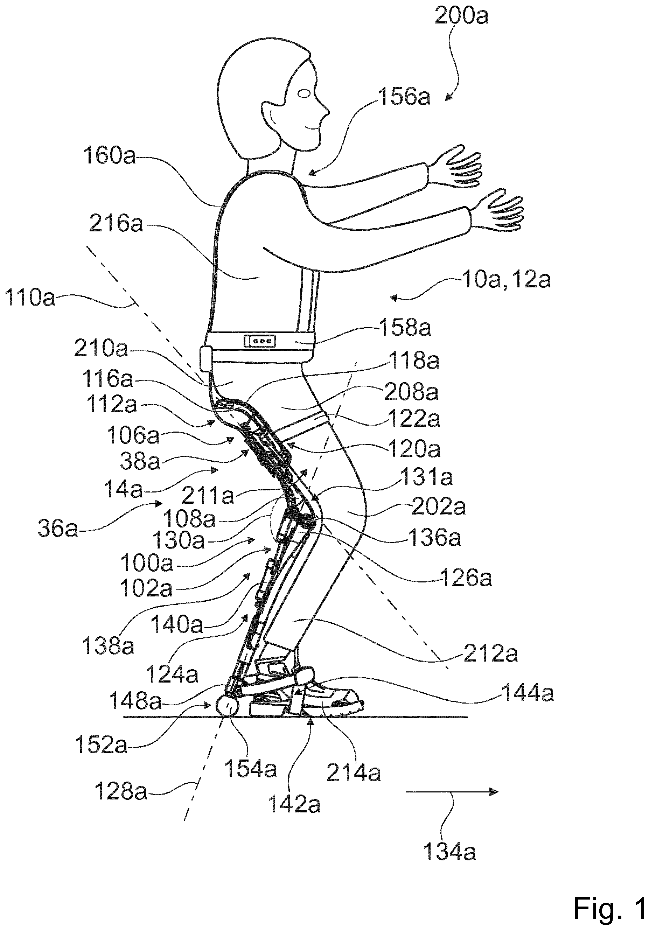

Fig. 1 shows a person 200a wearing a wearable sitting posture assisting device 100a. The wearable sitting posture assisting device 100a is configured for receiving a weight force of the person 200a in a sitting posture or in a partly sitting posture. In fig. 1 the person 200a is shown in a partly sitting posture. In the partly sitting posture a knee 202a of the person 200a is partly bent. In a sitting posture the knee 202a is bent more strongly than in the partly sitting posture. The wearable sitting posture assisting device 100a is configured for allowing the person 200a to sit down on it in different sitting postures and in different partly sitting postures. Furthermore, the wearable sitting posture assisting device 100a is configured for allowing the person 200a to walk while wearing the wearable sitting posture assisting device 100a. In addition, the wearable sitting posture assisting device 100a is configured for allowing the person 200a to stand and/or stand up and/or sit down and/or walk while wearing the wearable sitting posture assisting device 100a.

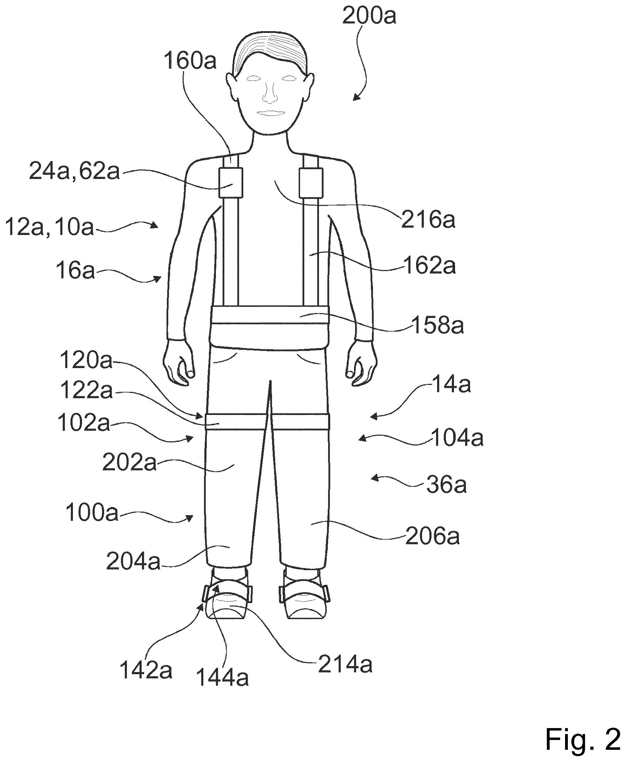

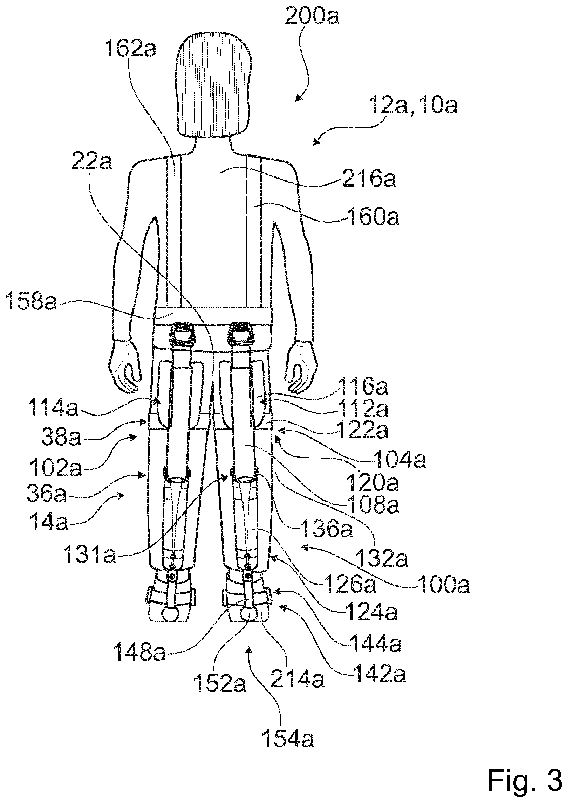

Fig. 2 shows the person 200a wearing the wearable sitting posture assisting device 100a, in a schematic front view. Fig. 3 shows the person 200a wearing the wearable sitting posture assisting device 100a, in a schematic rear view. In figs. 1 to 3 the wearable sitting posture assisting device 100a is shown in a normal wearing state. The normal wearing state encompasses a condition in which the person 200a sits or partly sits on the wearable sitting posture assisting device 100a, a condition in which the person 200a is standing up, a condition in which the person 200a is sitting down, a condition in which the person 200a stands, and a condition in which the person 200a walks, in each case while wearing the wearable sitting posture assisting device 100a. In the case shown the person 200a is wearing the wearable sitting posture assisting device 100a in a factory building, in particular while working at an assembly line. In a similar fashion it is conceivable that the person 200a wears the wearable sitting posture assisting device 100a in an office building, in a factory building, in a service building, outdoors, at work, at home, while working, during breaks, etc. Advantageously, the person 200a wears the wearable sitting posture assisting device 100a during an activity which requires the person 200a to repeatedly sit down and/or partly sit down and/or stand up and/or stand and/or walk. The person 200a can then sit down on the wearable sitting posture assisting device 100a when required, stand up while wearing the wearable sitting posture assisting device 100a when required, and walk while wearing the wearable sitting posture assisting device 100a when required.

The wearable sitting posture assisting device 100a comprises a leg unit 102a. Furthermore, the wearable sitting posture assisting device 100a comprises an additional leg unit 104a. The additional leg unit 104a is implemented identically and/or analogously to the leg unit 102a. Therefore, in the following only the leg unit 102a is described in detail. The description of the leg unit 102a is to be understood to be transferable to the additional leg unit 104a. It is also conceivable that an additional leg unit is implemented mirror-symmetrically to the leg unit 102a. In particular, it is conceivable that a leg unit and an additional leg unit are implemented as a right leg unit and a left leg unit, respectively, or vice versa.

In the case shown, the person 200a wears the leg unit 102a on a right leg 204a. The leg unit 102a is arranged on a rear side 211 a of the leg 204a of the person 200a. Furthermore, the person 200a wears the additional leg unit 104a on a left leg 206a. It is also conceivable that a person wears a leg unit on a left leg and an additional leg unit on a right leg. Furthermore, it is conceivable that a person only wears one leg unit. In addition, it is conceivable that a wearable sitting posture assisting device comprises only one leg unit. It is also conceivable that a leg unit is arranged on a lateral side of a leg and/or on a front side of a leg and/or between two legs of a person.

The person 200a sits or partly sits on the wearable sitting posture assisting device 100a in a sitting direction 134a. The person 200a faces and/or looks in the sitting direction 134a when facing forward. The sitting direction 134a is oriented parallel to a ground on which the person 200a is sitting or walking or standing.

The leg unit 102a comprises an upper leg 106a. The upper leg 106a comprises an upper leg support 108a. The upper leg 106a has an upper leg longitudinal axis 110a. The upper leg longitudinal axis 110a is oriented parallel to a plane defined by the sitting direction 134a and a surface normal of a ground the wearable sitting posture assisting device 100a stands on in the normal wearing state. The upper leg support 108a has a main extension direction which is oriented parallel to the upper leg longitudinal axis 110a. The upper leg longitudinal axis 110a is oriented parallel to a main extension direction of a thigh 208a of the leg 204a of the person, in particular when the person 200a sits, and/or partly sits and/or walks and/or stands up and/or stands while wearing the wearable sitting posture assisting device 100a.

The wearable sitting posture assisting device 100a comprises a seat unit 112a. The seat unit 112a is connected to the upper leg support 108a. In the partly sitting posture and/or in the sitting posture the person 200a sits on the seat unit 112a. In the case shown the person 200a sits on the seat unit 112a and on a seat unit 114a of the additional leg unit 104a in the partly sitting posture. The seat unit 112a comprises a sitting element 116a. The sitting element 116a contacts the thigh 208a of the person 200a. Furthermore, in the sitting posture and/or in the partly sitting posture the sitting element 116a contacts a buttock 210a of the person 200a. The seat unit 112a comprises a sitting surface 118a. The sitting element 116a comprises the sitting surface 118a. The sitting surface 118a is configured for allowing the person 200a to sit down on it with his thigh 208a and/or with his buttock 210a.

It is also conceivable that a wearable sitting posture assisting device comprises only one seat unit, in particular a common seat unit of two leg units. In particular, in this case it is conceivable that the seat unit is saddle-shaped and/or implemented in the manner of a saddle, in particular arranged between the legs of a person.

The wearable sitting posture assisting device 100a comprises a lower leg 124a. The lower leg 124a comprises a lower leg support 126a. The lower leg 124a has a lower leg longitudinal axis 128a. The lower leg longitudinal axis 128a is oriented perpendicularly to the sitting direction 134a parallel to a plane defined by the sitting direction 134a and a surface normal of a ground the wearable sitting posture assisting device 100a is standing on in the normal wearing condition. The lower leg longitudinal axis 128a and the upper leg longitudinal axis 110a are arranged in a common plane. The lower leg support 126a has a main extension direction which is oriented parallel to the lower leg longitudinal axis 128a. The lower leg longitudinal axis 128a is oriented parallel to a main extension direction of a shank 212a of the leg 204a of the person 200a, in particular when the person 200a sits, and/or partly sits and/or sits and/or stands while wearing the wearable sitting posture assisting device 100a.

The upper leg 106a and the lower leg 124a define a sitting angle 130a. The sitting angle 130a is an angle included by the upper leg longitudinal axis 110a and the lower leg longitudinal axis 128a. The sitting angle 130a is similar or identical to an angle between the thigh 208a and the shank 212a of the person 200a. The sitting angle 130a having a value between 60° and 130°, in particular a value of approximately 90°, corresponds to different sitting postures or to at least one sitting posture. The sitting angle 130a having a value between 130° and 170° corresponds to different partly sitting postures. In case the person 200a is standing while wearing the wearable sitting posture assisting device 100a, the sitting angle 130a has a value between 160° and 180°, in particular a value of approximately 180°. In case the person 200a is walking while wearing the wearable sitting posture assisting device 100a, the sitting angle 130a may significantly differ from 180°, in particular in case the person 200a bends his knee 202a. In the sitting posture and/or in the partly sitting posture and/or when standing, the sitting angle 130a and an analogously defined additional sitting angle of the additional leg unit 104a are advantageously identical. However, it is also conceivable that the person 200a may sit on the wearable sitting posture assisting device 100a in a sitting posture or a partly sitting posture with the sitting angle 130a and the additional sitting angle differing, in particular by up to 5°, by up to 10°, by up to 15°, by up to 20°, by up to 30°, by up to 40°, or more. When the person 200a is walking while wearing the wearable sitting posture assisting device 100a, the sitting angle 130a and the additional sitting angle may significantly differ, for instance in case the person 200a bends one of his knees 202a more than his other knee 202a.

The leg unit 102a comprises a knee joint 131 a, which pivotably connects the upper leg 106a to the lower leg 124a. The knee joint 131 a connects the upper leg 106a to the lower leg 124a pivotably about a knee joint axis 132a. The knee joint axis 132a is oriented perpendicularly with respect to the upper leg longitudinal axis 110a. The knee joint axis 132a is oriented perpendicularly to the lower leg longitudinal axis 128a. The knee joint axis 132a is oriented perpendicularly to the sitting direction 134a. The knee joint 131 a is partly implemented integrally with the upper leg support 108a. The knee joint 131 a is partly implemented integrally with the lower leg support 126a. The knee joint 131 a comprises at least one bearing 136a, which connects the upper leg support 108a to the lower leg support 126a.

The leg unit 102a comprises a locking unit 138a, which is configured for locking the knee joint 131 a. The locking unit 138a is configured for limiting the sitting angle 130a to a minimum value. The locking unit 138a is configured for allowing the person 200a to choose the minimum value of the sitting angle 130a. In case the locking unit 138a is in a locked state, the person 200a can sit down on the wearable sitting posture assisting device 100a with the sitting angle 130a at its minimum value. The locking unit 138a is configured for being actuated by the person 200a. The locking unit 138a comprises a blocking element 140a. The blocking element 140a is a spring, in particular a gas spring. The blocking element 140a is configured for being lockable at different lengths. The blocking element 140a is connected to the upper leg support 108a. The blocking element 140a is connected to the lower leg support 126a. The blocking element 140a is configured for damping a movement of the upper leg 106a with respect to the lower leg 124a, in particular when the person 200a is sitting down.

The wearable sitting posture assisting device 100a comprises a foot unit 142a. The foot unit 142a is configured for connecting to a foot and/or shoe 214a of the person 200a. The foot unit 142a comprises a foot connector 144a for connecting to the foot and/or shoe 214a of the person 200a. The foot unit 142a comprises a foot unit support 148a. The foot unit support 148a is connected to the lower leg 124a. The foot unit support 148a is connected to the lower leg support 126a. The foot connector 144a is connected to the foot unit support 148a.

The wearable sitting posture assisting device 100a comprises a thigh connection unit 120a for connecting to the thigh 208a of the person 200a. The thigh connection unit 120a is connected to the upper leg support 108a. The thigh connection unit 120a is configured for connecting the upper leg 106a to the thigh 208a of the person 200a. The thigh connection unit 120a comprises a thigh strap 122a. The thigh strap 122a is fixed to the thigh 208a of the person 200a.

The leg unit 102a comprises a ground contact unit 152a. The ground contact unit 152a is connected to the lower leg support 126a. The ground contact unit 152a comprises a ground contact element 154a. When the person 200a sits or partly sits on the wearable sitting posture assisting device 100a, the ground contact unit 152a, in particular the ground contact element 154a, is in contact with the ground. The ground contact unit 152a, in particular the ground contact element 154a, is configured for transmitting a portion of a weight force of the person 200a to the ground. The ground contact element 154a is made of rubber. However, other shapes and/or materials are conceivable for a ground contact element as mentioned above.

When the person 200a sits or partly sits on the wearable sitting posture assisting device 100a, the weight force of the person 200a is at least partly, in particular directly or indirectly, transmitted from the seat unit 112a to the upper leg support 108a; from the upper leg support 108a to the knee joint 131 a; from the knee joint 131 a to the lower leg support 126a; from the lower leg support 126a to the ground contact element 154a; and from the ground contact element 154a to the ground.

In particular, the weight force of the person 200a is additionally transmitted to the ground via a foot and/or shoe 214a of the person 200a. Preferably, the ground contact element 154a is arranged on a rear side of the foot and/or shoe 214a of the person 200a. When the person 200a sits or partly sits on the wearable sitting posture assisting device 100a, the foot and/or shoe 214a of the person 200a is in contact with the ground in addition to the ground contact element 154a. Preferably, the ground contact element 154a is arranged contactlessly with respect to the ground when the person 200a walks and/or stands while wearing the wearable sitting posture assisting device 100a.

The wearable sitting posture assisting device 100a comprises an upper body wearing unit 156a. The person 200a wears the upper body wearing unit 156a on his upper body 216a, which upper body 216a may include hips and/or a waist of the person 200a. The upper body wearing unit 156a comprises a belt 158a. Furthermore, the upper body wearing unit 156a comprises suspenders 160a, 162a. The leg unit 102a is connected to the upper body wearing unit 156a. The additional leg unit 104a is connected to the upper body wearing unit 156a. It is conceivable that an upper body wearing unit comprises no belt and only suspenders, or vice versa. It is also conceivable that a wearable sitting posture assisting device is only connected to legs and/or feet and/or shoes of a person who it is worn by. Furthermore, it is conceivable that a wearable sitting posture assisting device comprises no upper body wearing unit.

The wearable sitting posture assisting device 100a comprises at least one functional assembly 14a. The functional assembly 14a comprises at least one functional unit 36a. The functional unit 36a is configured for implementing at least one posture assisting function for the person 200a in at least one wearing state. In the case shown, the functional unit 36a comprises the leg unit 102a. Furthermore, the functional unit 36a comprises the additional leg unit 104a.

The wearable sitting posture assisting device 100a comprises at least one individualization assembly 10a. The individualization assembly 10a comprises at least one individualization unit 12a, which is connectable to the functional assembly 14a. The individualization unit 12a is configured for individualization of the wearable sitting posture assisting device 100a in the wearing state. In particular, the individualization unit 12a is configured to individually adjust the wearable sitting posture assisting device 100a to a specific user, for instance to a body dimension and/or a profile and/or a preference of the user.

The functional assembly 14a comprises a connection unit 38a, which is configured for connecting to at least one individualization unit 12a of at least one individualization assembly 10a. In the case shown, the individualization unit 12a is connected to the connection unit 38a. In the case shown, the connection unit 38a comprises a number of connection elements that are connected to the functional unit 36a, in particular to different elements of the functional unit 36a. Furthermore, in the case shown, the leg unit 102a, and in particular the additional leg unit 104a, implements at least a portion of the connection unit 38a. In particular, the individualization assembly 10a and the functional assembly 14a together implement the wearable sitting posture assisting device 100a. Different functionalities of the wearable sitting posture assisting device 100a are in particular provided by the functional assembly 14a, in particular sitting functions and the like, while an adjustment to the person 200a and/or preferences of the person 200a are/is in particular realized by choosing a certain individualization assembly 10a, which is in particular configured for being assigned to a certain person 200a.

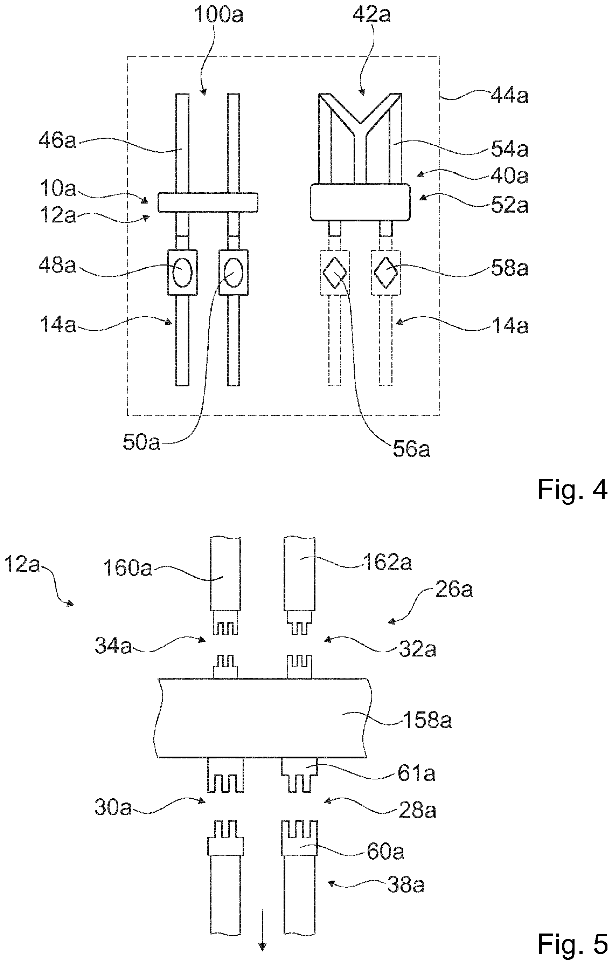

Figure 4 shows a system 44a comprising the wearable sitting posture assisting device 100a and an alternative individualization assembly 40a in a schematic front view. The alternative individualization assembly 40a is configured for implementing an alternative wearable sitting posture assisting device 42a together with the functional assembly 14a. The wearable sitting posture assisting device 100a and the alternative wearable sitting posture assisting device 42a are configured for being alternatively used. In particular, the wearable sitting posture assisting device 100a is used by the person 200a, while the alternative wearable sitting posture assisting device 42a is used by an alternative person.

The system 44a can be used in a method, wherein the wearable sitting posture assisting device 100a is used by the person 200a in a first usage and wherein the alternative wearable sitting posture assisting device 42a is used by the alternative person in a second usage. The person 200a and the alternative person are in particular enabled to share the functional assembly 14a while individualization of the respective wearable sitting posture assisting devices 42a, 100a is provided by the individualization assembly 10a and the alternative individualization assembly 40a, respectively.

The individualization unit 12a comprises at least one individualization element 46a, 48a, 50a. The individualization unit 12a and the individualization elements 46a, 48a, 50a are shown only schematically in figure 4. In particular, the individualization unit 12a may comprise different types and/or a different number of individualization elements, as will become apparent in particular from the following figures. The alternative individualization assembly 40a comprises an alternative individualization unit 52a. In the case shown, the alternative individualization unit 52a comprises a plurality of alternative individualization elements 54a, 56a, 58a, which are in particular configured for replacing the individualization elements 46a, 48a, 50a of the individualization unit 12a, in particular for the purpose of implementing the alternative wearable sitting posture assisting device 42a. For instance, at least a portion of the upper body wearing unit 156a, for instance the belt 158a, and/or at least a portion of the thigh connection unit 120a, for instance the thigh strap, and/or at least a portion of the seat unit 112a and/or at least a portion of the foot unit 142a may be implemented as at least one individualization element.

The individualization unit 12a is configured for contacting at least one body part of the person 200a wearing the wearable sitting posture assisting device 100a in the wearing state. At least a portion of the parts of the wearable sitting posture assisting device 100a that come into contact, in particular direct contact, with the person 200a in the wearing state, for instance at least some parts that may come into contact with sweat in the wearing state, are implemented by the individualization unit 12a.

Figure 5 shows a portion of the wearable sitting posture assisting device 100a, in a schematic rear view. The individualization unit 12a comprises at least one wearing unit 26a for connecting to at least one body part of the person 200a. In the case shown, the belt 158a and the suspenders 160a, 162a are part of the wearing unit 26a. It is also conceivable that at least a portion of the thigh connection unit 120a and/or at least a portion of the foot connector 144a are part of the wearing unit 26a or part of an additional wearing unit of the individualization unit 12a. The connection unit 38a comprises at least one connection element 60a for connecting to the individualization unit 12a. In the case shown, the belt 158a comprises an additional connection element 61 a for connecting to the connection element 60a of the connection unit 38a.

At least a portion of the individualization unit 12a is exchangeable without tools. In the case shown, the belt 158a is connectable to and disconnectable from the functional assembly 14a, and in particular the connection unit 38a, without tools. The functional unit 12a and the connection unit 38a together implement at least one quick connector 28a. In the case shown, the quick connector 28a is implemented as a socket fastener.

The individualization unit 16a is configured for implementing at least a portion of at least one quick connector 28a, 30a, 32a, 34a in the wearing state, which quick connector 28a, 30a, 32a, 34a is configured for providing at least one inadvertent-error-prevention constraint. In the case shown, the quick connectors 28a, 30a, 32a, 34a are of a poka yoke type. In particular, the quick connectors 28a, 30a are configured for connecting the belt 158a to the functional assembly 14a, in particular to the connection unit 38a. Furthermore, the quick connectors 32a, 34a are configured for connecting the suspenders 160a, 162a to the belt 158a. The quick connectors 32a, 34a, 36a, 38a are implemented in such a way that erroneous connection, for instance due to confusion of left and right suspenders or leg units or the like, is prevented.

The individualization unit 12a comprises at least one exchangeable padding unit 16a (compare figure 2). At least a portion of the exchangeable padding unit 16a is configured for contacting at least one body part of the person 200a in the wearing state. The individualization unit 12a is configured for implementing at least one function which is different from a size adjustment. In the case shown, the individualization unit 12a, in particular the padding unit 16a, implements a padding function. In particular, a stiffness and/or a hardness and/or damping properties of parts of the wearable sitting posture assisting device 100a that are configured for directly contacting at least one body part of the person 200a in the wearing state, in particular when sitting on the wearable sitting posture assisting device 100a, can be adjusted by choosing a certain individualization assembly 10a. For instance, a person with a low body weight may choose softer paddings than a rather heavy person. Additionally or alternatively, a geometry of an upper body wearing unit and/or a respective fit may be adjusted by choosing a certain individualization assembly. Furthermore, it is conceivable that a connection strength, for instance of a thigh connection unit or a foot connector, is adjustable by a choice of a certain individualization assembly. It is also conceivable that an individualization unit comprises an individualizable and/or exchangeable damping element for damping a movement of a knee joint or and/or an exchangeable individualizable locking mechanism or the like.

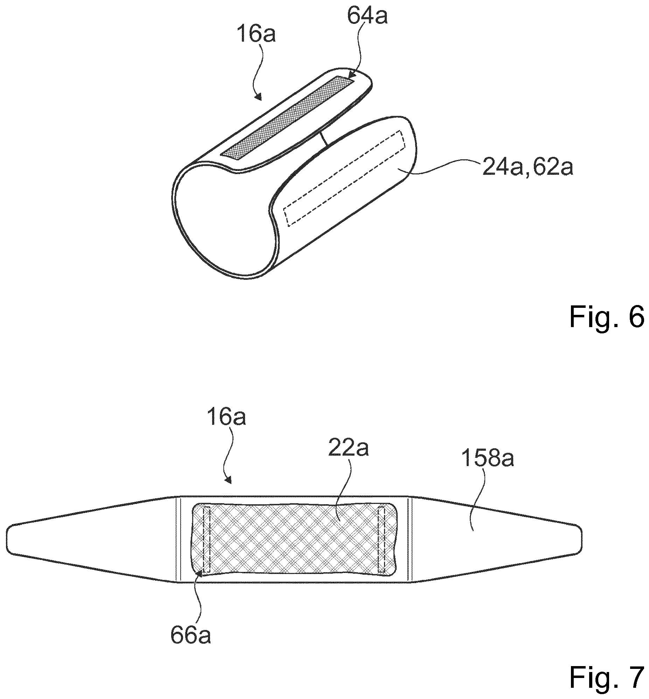

Figure 6 shows a first individualization element 62a of the individualization assembly 10a, in a perspective view (compare also figure 2). The first individualization element 62a is implemented as an upper body padding element 24a. The first individualization element 62a is a part of the padding unit 16a. The first individualization element 62a implements a quick fastener 64a. The quick fastener 64a is implemented as a hook-and-loop fastener. The first individualization element 62a is connectable to and disconnectable from one of the suspenders 160a, 162a. In the case shown, the first individualization element 62a is configured for padding a shoulder and/or a chest of the person 200a in the wearing state. Furthermore, in the case shown, the first individualization element 62a is implemented as a wrap element. In particular, the first individualization element 62a can be wrapped around the suspender 160a in an open state and/or be connected to the suspender 160a by closing the quick fastener 64a after wrapping the first individualization element 62a around the suspender 160a. It is conceivable that the connection unit 38a comprises at least one connection element for the first individualization element 62a, which is connected to and/or implemented by at least one of the suspenders 160a, 162a and which preferably defines a connection position for the first individualization element 62a.

Figure 7 shows the belt 158a of the wearable sitting posture assisting device 100a, in a schematic front view. The padding unit 16a comprises at least one belt padding element 22a. The belt padding element 22a is connectable to and disconnectable from the belt 158a. The belt padding element 22a is an individualization element. In the case shown, the belt 158a itself is also an individualization element. It is also conceivable that a belt is a part of a connection unit and/or of a functional unit and/or of a functional assembly. The belt padding element 22a and the belt 158a together implement a quick fastener 66a. The quick fastener 66a is implemented as a hook-and-loop fastener. However, it is also conceivable that a quick fastener is implemented as a magnetic fastener. Furthermore, it is conceivable that a padding element is disposable and/or configured for being glued to a functional assembly.

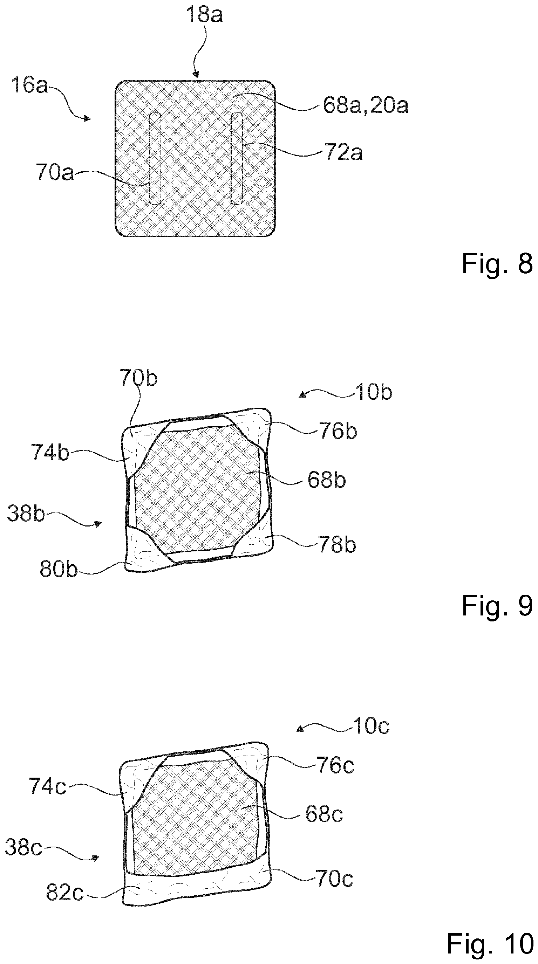

Fig. 8 shows a second individualization element 68a of the individualization assembly 10a, in a perspective view. The second individualization element 68a is a part of the padding unit 16a. The second individualization element 68a is implemented as a seat padding element 20a. In the case shown, the second individualization element 68a is a part of the seat unit 112a. Furthermore, the second individualization element 68a implements at least a portion of the sitting surface 118a in the wearing state. The person 200a at least partly sits on the second individualization element 68a when sitting or partly sitting on the wearable sitting posture assisting device 100a. The second individualization element 68a is configured for contacting a rear side of the thigh 208a of the person 200a. A softness and/or a stiffness and/or shape of the seat unit 112a can be adjusted by choosing an individualization assembly 10a with a certain seat padding element 20a, in particular of a certain softness and/or stiffness and/or shape.

The padding unit 16a comprises at least one material 18a which is at least partly permeable to air. In the case shown, the seat padding element 20a comprises the material 18a. The material 18a is a breathable material. The material 18a is a 3-dimensional mesh fabric. Furthermore, in the case shown, the upper body padding element 24a and/or the belt padding element 22a are at least partly made of a breathable material, in particular of the same material 18a as the seat padding element 22a.

The connection unit 38a comprises at least one connection element 70a, 72a for the second individualization element 68a. In the case shown, the connection element 70a, 72a is fixated to the sitting element 116a of the seat unit 112a. In a connected state, the second individualization element 68a is mounted on top of the sitting element 116a and implements a portion of the sitting surface 118a.

It is conceivable that a padding unit comprises at least one quick fastener which is configured for providing at least one inadvertent-error-prevention constraint. In particular, a padding unit may comprise at least one poka yoke-type connector, for instance between a padding element and a belt. It is also conceivable that a connection between a functional assembly, in particular a connection unit of a functional assembly, and a padding unit provide at least one inadvertent-error-prevention constraint.

Figures 9 to 14 show further exemplary embodiments of the invention. The following description is substantially limited to the differences between the exemplary embodiments, wherein regarding structural elements, features and functions that remain the same the description of the other exemplary embodiments, in particular the exemplary embodiment of figs. 1 to 8, may be referred to. For distinguishing the exemplary embodiments, the letter a of the reference numerals in the exemplary embodiment of figs. 1 to 8 has been substituted by the letters b to f in the reference numerals of the exemplary embodiments of figs. 9 to 14. Regarding structural elements having the same denomination, in particular regarding structural elements having the same reference numerals, principally the drawing and/or the description of the other exemplary embodiments, in particular of the exemplary embodiment of figs. 1 to 8, may be referred to.

Figures 9 to 14 exemplarily show different implementations of individualization elements as seat padding elements and portions of connection units configured for connecting to the respective seat padding elements. However, other padding elements and/or other individualization elements and/or their connections may be implemented analogously to the shown seat padding elements.

Figure 9 show an individualization element 68b of a first alternative individualization assembly 10b, in a perspective view. The individualization element 68b is implemented as a seat padding element. The individualization element 68b is connected to a connection element 70b of a connection unit 38b. The connection element 70b is implemented as a pocket for the individualization element 68b. The connection element 70b comprises, in particular four, corner elements 74b, 76b, 78b, 80b, which cover corners of the individualization element 68b and/or hold the individualization element 68b in a connection position, in particular inside a pocket defined by the connection element 70b.

Figure 10 shows an individualization element 68c of a second alternative individualization assembly 10c, in a perspective view. The individualization element 68c is implemented as a seat padding element. The individualization element 68c is connected to a connection element 70c of a connection unit 38c. The connection element 70c implements a pocket for the individualization element 68c. The connection element 70c comprises two corner elements 74c, 76c and one edge element 82c for fixing the individualization element 68c on two corners and on one edge opposite these corners.

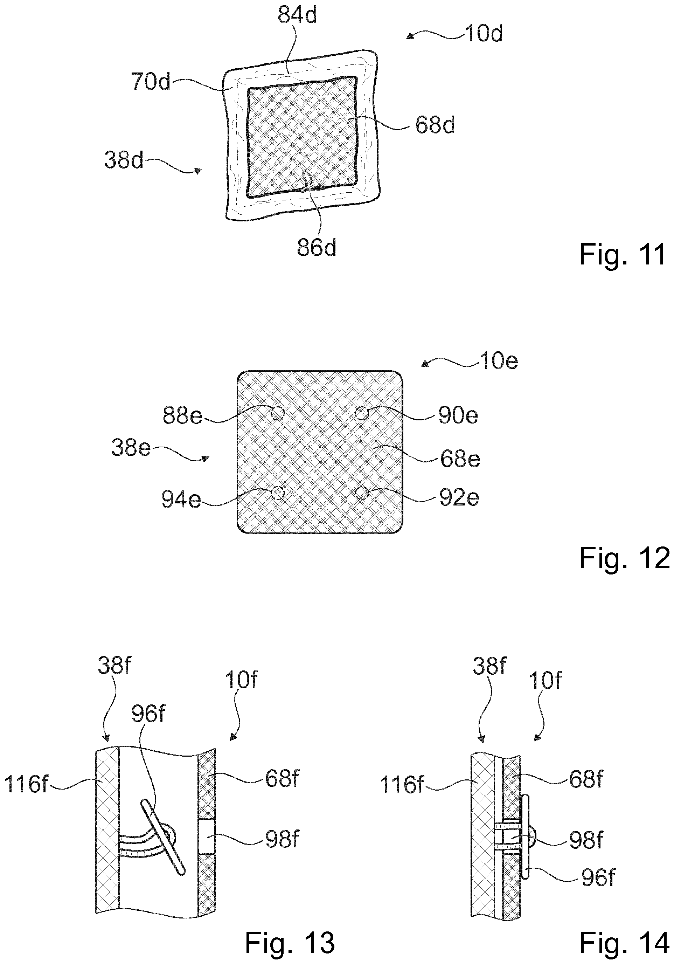

Figure 11 shows an individualization element 68d of a third alternative individualization assembly 10d, in a perspective view. The individualization element 68d is implemented as a seat padding element. The individualization element 68d is connected to a connection element 70d of a connection unit 38d. The connection element 70d implements a pocket for the individualization element 68d. The connection element 70d comprises a seam element 84d and a tieback 86d for opening and closing the pocket by pulling and releasing the seam element 84d.

Figure 12 shows an individualization element 68e of a fourth alternative individualization assembly 10e, in a schematic front view. The individualization element 68e is implemented as a seat padding element. The individualization element 68e is connected to at least one connection element 88e, 90e, 92e, 94e of a connection unit 38e. In the case shown, the connection unit 38e comprises four connection elements 88e, 90e, 92e, 94e, while, in particular, other numbers of connection elements are conceivable, for instance a single connection element or two or three or five or ten or more connection elements or the like. The connection elements 88e, 90e, 92e, 94e are implemented as magnetic connectors, which are configured for connecting to respective magnetic or magnetizable connection elements of the individualization element 68e. In the case shown, the connection unit 38e provides at least one inadvertent-error-prevention constraint for a connection of the individualization element 68e, which may, for instance, be implemented by an arrangement and/or a shape of the connection elements 88e, 90e, 92e, 94e. For instance, lefthand and righthand seat unit connectors for seat padding elements may be implemented differently in order to avoid erroneous connection of seat padding elements.

Figure 13 shows an individualization element 68f of a fifth alternative individualization assembly 10f in a disconnected state, in a lateral sectional view. Figure 14 shows the individualization element 68f of the fifth alternative individualization assembly 10f in a connected state, in a lateral sectional view. The individualization element 68f is implemented as a seat padding element. The individualization element 68f is connected to at least one connection element 96f of a connection unit 38f. The connection element 96f is connected to a seat element 116f. The connection element 96f comprises a band element, in particular a rubber band, connected to a fixing element, in particular a button or a bar element. The connection element 96f is configured for passing through a connection opening 98f of the individualization element 68f, in particular in the manner of a button-buttonhole connection.

## Claims

1. An individualization assembly for a wearable sitting posture assisting device (100a), comprising at least one individualization unit (12a) which is connectable to at least one functional assembly (14a) of the wearable sitting posture assisting device (100a) and is configured for individualization of the wearable sitting posture assisting device (100a) in at least one wearing state.

2. The individualization assembly according to claim 1, **characterized in that** the individualization unit (12a) is configured for contacting at least one body part of a person (200a) wearing the wearable sitting posture assisting device (100a) in the wearing state.

3. The individualization assembly according to claim 1 or 2, **characterized in that** at least a portion of the individualization unit (12a) is exchangeable without tools.

4. The individualization assembly according to any one of the preceding claims, **characterized in that** the individualization unit (12a) is configured for implementing at least one function which is different from a size adjustment.

5. The individualization assembly according to any one of the preceding claims, **characterized in that** the individualization unit (12a) comprises at least one exchangeable padding unit (16a-f).

6. The individualization assembly according to claim 5, **characterized in that** the padding unit (16a) comprises at least one material (18a) which is at least partly permeable to air.

7. The individualization assembly according to claim 5 or 6, **characterized in that** the padding unit (16a-f) comprises at least one seat padding element (20a-f).

8. The individualization assembly according to any one of claims 5 to 7, **characterized in that** the padding unit (16a) comprises at least one belt padding element (22a).

9. The individualization assembly according to any one of claims 5 to 8, **characterized in that** the padding unit (16a) comprises at least one upper body padding element (24a).

10. The individualization assembly according to any one of the preceding claims, **characterized in that** the individualization unit (16a) comprises at least one wearing unit (26a) for connecting to at least one body part of a person (200a) in the wearing state.

11. The individualization assembly according to any one of the preceding claims, **characterized in that** the individualization unit (12a) is configured for implementing at least a portion of at least one quick connector (28a, 30a, 32a, 34a) in the wearing state, which quick connector (28a, 30a, 32a, 34a) is configured for providing at least one inadvertent-error-prevention constraint.

12. A functional assembly for a wearable sitting posture assisting device (100a), comprising at least one functional unit (36a) which is configured for implementing at least one posture assisting function for a person (200a) in at least one wearing state, and comprising a connection unit (38a) which is configured for connecting to at least one individualization unit (12a) of at least one individualization assembly (10a), in particular an individualization assembly (10a) according to any one of the preceding claims.

13. A wearable sitting posture assisting device, comprising at least one functional assembly (14a) according to claim 12 and at least one individualization assembly (10a), in particular according to any one of claims 1 to 11.

14. A system, comprising a wearable sitting posture assisting device (100a) according to claim 13 and comprising at least one alternative individualization assembly (40a), which is configured for at least partly replacing the individualization assembly (10a) in order to implement an alternative wearable sitting posture assisting device (42a) together with the functional assembly (14a).

15. A method for using a system 44a according to claim 14, wherein the wearable sitting posture assisting device (100a) is used by a first person (200a) in a first usage and wherein the alternative wearable sitting posture assisting device (42a) is used by a second person in a second usage.
